Europäisches Patentamt

European Patent Office

Office européen des brevets

(19)

(11) Numéro de publication : **0 091 354**
**B1**

(12)    **FASCICULE DE BREVET EUROPÉEN**

(45) Date de publication du fascicule du brevet :
02.01.86

(51) Int. Cl.⁴ : **H 02 B   1/00**

(21) Numéro de dépôt : 83400638.9

(22) Date de dépôt : 28.03.83

(54) **Disjoncteur blindé haute tension.**

(30) Priorité : 05.04.82 FR 8206017

(43) Date de publication de la demande :
12.10.83 Bulletin 83/41

(45) Mention de la délivrance du brevet :
02.01.86 Bulletin 86/01

(84) Etats contractants désignés :
BE CH DE GB IT LI NL SE

(56) Documents cités :
US-A- 2 615 707
PATENTS ABSTRACTS OF JAPAN; vol. 3 no. 10, 29
janvier 1979, page 129E87
PATENTS ABSTRACTS OF JAPAN, vol. 1, no. 21, 25
mars 1977, page 1007E77
PATENTS ABSTRACTS OF JAPAN, vol. 4, no. 170(E-
35)(652), 22 novembre 1980, page 652E35

(73) Titulaire : **MERLIN GERIN**
**Rue Henri Tarze**
**F-38050 Grenoble Cedex (FR)**

(72) Inventeur : **Jacquemet, Bernard**
**Merlin Gerin Rue Henri Tarze**
**F-38050 Grenoble Cedex (FR)**
Inventeur : **Ravet, Jean-Paul**
**Merlin Gerin Rue Henri Tarze**
**F-38050 Grenoble Cedex (FR)**

(74) Mandataire : **Kern, Paul et al**
**Merlin Gerin Sce. Brevets 20, rue Henri Tarze**
**F-38050 Grenoble Cedex (FR)**

Jouve, 18, rue St-Denis, 75001 Paris, France

## Description

L'invention est relative à un disjoncteur blindé haute tension ayant une cuve métallique verticale allongée, obturée par un couvercle supérieur et remplie d'un gaz à rigidité diélectrique élevée, la partie active du disjoncteur en forme de colonne étant logée dans ladite cuve en reposant sur le fond inférieur de la cuve par des pieds isolants.

Un disjoncteur blindé du genre mentionné, par exemple décrit dans le brevet FR-A-2 235 470, peut atteindre une hauteur de plusieurs mètres, et les oscillations résultant d'un choc pendant le transport ou lors d'un séisme peuvent engendrer des contraintes excessives et des détériorations de la partie active logée dans la cuve. Les solutions conventionnelles de calage pendant le transport sont inapplicables lorsque les cuves sont scellées et remplies de gaz en usine, et elles ne résolvent pas le problème des séismes.

La présente invention a pour but de remédier à ces inconvénients et de permettre la réalisation d'un dispositif de fixation robuste permettant une dilatation thermique différentielle des parties constitutives du disjoncteur.

Le disjoncteur selon l'invention est caractérisé par le fait que la partie supérieure de ladite colonne est ancrée à ladite cuve par au moins deux haubans élastiques susceptibles d'exercer une composante radiale de maintien en position de la colonne.

Les haubans s'étendent radialement entre la partie supérieure de la colonne et le couvercle en étant répartis régulièrement sur la circonférence de la colonne. L'élasticité des haubans permet une compensation des dilatations thermiques suffisante pour limiter les contraintes exercées sur la partie active du disjoncteur. Le nombre de haubans peut être augmenté en fonction des intensités des séismes prévus, le nombre minimal étant de deux. Les haubans sont constitués par une tige isolante assurant l'isolation entre la partie active du disjoncteur et la cuve métallique généralement mise à la terre, la tige isolante portant à ses extrémités des pièces d'ancrage dont l'une présente une vis de réglage. Le hauban présente une élasticité à la compression et à la traction à partir d'une position d'équilibre de repos, et le dispositif de réglage permet, au montage effectué à une température ambiante de 15 à 20 °C, de n'exercer aucun effort sur la partie active du disjoncteur. Lors d'une variation de la température en augmentation ou en diminution les haubans seront comprimés ou étirés mais assureront toujours un effort de centrage de la colonne. Il est avantageux d'articuler les haubans sur la partie supérieure de la colonne afin d'éviter tout blocage de la colonne.

D'autres avantages et caractéristiques ressortiront plus clairement de la description qui va suivre d'un mode de mise en œuvre de l'invention, donné à titre d'exemple non limitatif et représenté au dessin annexé, dans lequel :

la figure 1 est une vue schématique en coupe axiale d'un disjoncteur selon l'invention ;

la figure 2 est une vue à échelle agrandie d'un hauban selon la figure 1 ;

la figure 3 est une vue de dessus, montrant les deux haubans de fixation selon la figure 1 ;

la figure 4 est une vue analogue à celle de la figure 3, montrant une fixation à trois haubans.

Sur les figures, une cuve métallique cylindrique 10 est disposée verticalement sur un châssis de support 12. La cuve 10 est obturée d'une manière étanche par un couvercle supérieur 14 et est remplie d'un gaz à rigidité diélectrique élevée, tel que l'hexafluorure de soufre sous pression.

A l'intérieur de la cuve 10 est disposée coaxialement une colonne 16 constituant la partie active du disjoncteur. La partie active 16 comporte quatre intervalles de coupure connectés en série et disposés chacun entre deux plateaux successifs 18 reliés par des entretoises isolantes 20. La colonne 16 repose par l'intermédiaire d'un socle isolant 22 sur le fond 24 de la cuve 10. Des traversées étanches 26, 28, reliées respectivement aux plateaux inférieur et supérieur 18, constituent les entrées et sorties du disjoncteur. Il est inutile de décrire plus en détail un tel disjoncteur, qui fait l'objet du brevet précité FR-A-2 235 470 auquel on se reportera avantageusement. Il est clair que le nombre d'intervalles de coupure peut être différent.

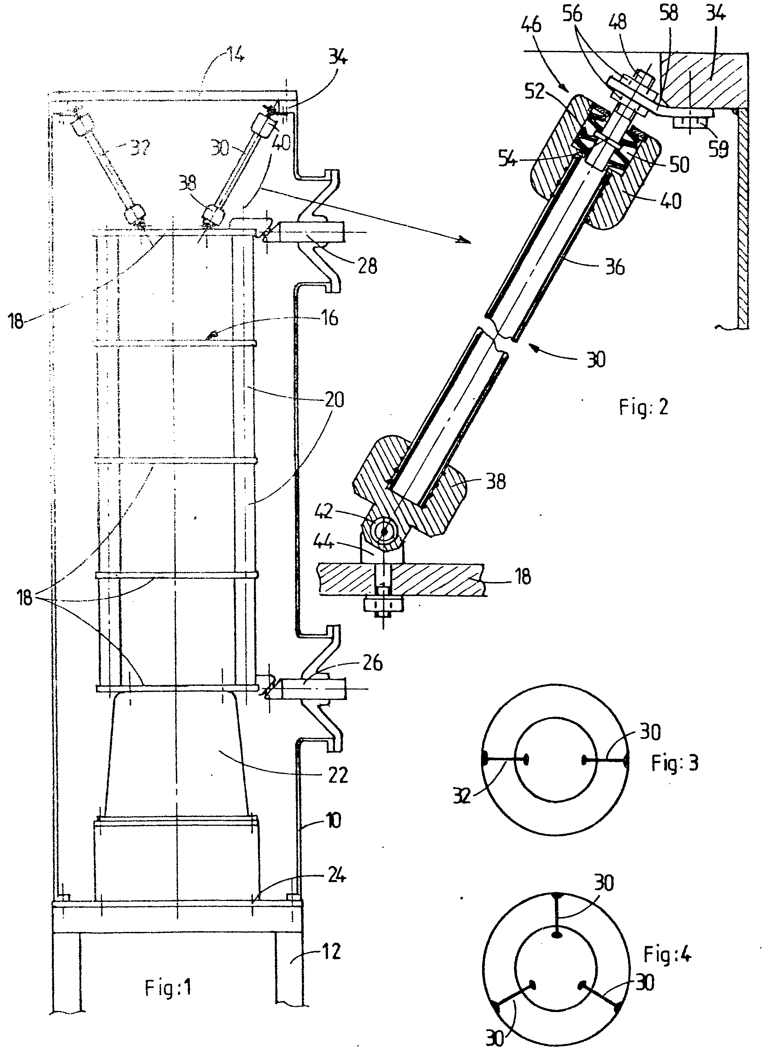

Selon la présente invention, deux haubans 30, 32 sont ancrés d'une part au plateau supérieur 18 de la colonne 16, et d'autre part au couvercle 14 ou plus exactement à une bride 34 de fixation du couvercle 14, en s'étendant en oblique dans un plan diamétral de la cuve 10. Les haubans 30, 32 sont identiques et seul l'un 30 d'entre eux sera décrit en détail en référence à la figure 2. Le hauban 30 comporte une tige ou bielle isolante 36 rigidement assujettie à ses extrémités à des pièces d'ancrage 38, 40. La pièce 38 est articulée par une rotule 42 sur une chape 44 boulonnée au plateau supérieur 18. La pièce d'ancrage opposée 40 présente une liaison télescopique 46 constituée par une tige de fixation coulissante 48 s'étendant coaxialement dans un logement 50 de rondelles élastiques 52. La tige de fixation 48 porte un collet 54 interposé entre les rondelles élastiques 52, qui sollicitent la tige 48 en une position intermédiaire d'équilibre. La liaison élastique 46 permet un raccourcissement et un allongement du hauban 30 à l'encontre de la force élastique des ressorts ou rondelles 52. La tige de fixation 48 filetée à son extrémité est fixée par deux écrous de réglage 56 à un support 58, lui-même assujetti à la bride 34. Le support 58 peut être fixé à la bride 34 par des vis 59, qui sont avantageusement les vis ou boulons de fixation du couvercle 14. On évite ainsi toute perforation de la cuve 10 ou du couvercle 14 ou toute pièce de fixation additionnelle. La liaison télescopique 46 est agencée pour permettre un léger pivotement du hauban, et il est inutile de prévoir du côté de la pièce d'ancrage 40 une rotule de fixation analogue à la rotule 42 de la pièce 38. Le hauban 30 s'étend en oblique et il est facile de voir qu'il est capable d'exercer une composante radiale sur le plateau 18 de la partie supérieure de la colonne 16. L'angle d'inclinaison du hauban 30 est bien entendu fonction du point de fixation 44 sur le plateau supérieur 18 et de l'intervalle entre ce plateau 18 et le couvercle 14.

Le dispositif selon l'invention est mis en œuvre de la manière suivante :

Les haubans 30, 32 sont mis en place avant la pose du couvercle 14 et les écrous de réglage 56 sont bloqués de manière qu'à une température ambiante d'environ 15 à 20 °C la liaison télescopique 46 soit dans la position d'équilibre. Dans cette position, les haubans 30, 32 n'exercent aucune force sur le plateau supérieur 18 et sont inactifs. La tige isolante 36 des haubans 30, 32 assure l'isolation entre la partie active 16 et la cuve métallique 10, et la cuve peut être remplie en usine d'hexafluorure de soufre sous pression, bien entendu après fermeture du couvercle 14. On comprend que lors d'un choc ou d'un séisme tendant par exemple à déplacer la partie supérieure de la colonne 16 vers la droite sur la figure 1, le hauban 30 est comprimé, tandis que le hauban 32 est allongé. Les liaisons télescopiques élastiques 46 des haubans 30, 32 s'opposent à ce raccourcissement et à cet allongement et exercent sur le plateau 18 une réaction tendant à maintenir la colonne 16 dans sa position médiane. La réaction dépend des caractéristiques des rondelles élastiques 52, qui seront choisies en conséquence. Tout déplacement excessif susceptible de détériorer la colonne 16 est ainsi évité. Il convient de noter qu'un déplacement du plateau supérieur 18 dans un plan perpendiculaire à celui de la figure 1, provoque un allongement des haubans 30, 32 et une réaction de centrage de la manière décrite ci-dessus. Il est clair que les haubans 30, 32 exercent cet effort de centrage quelle que soit la direction de déplacement du plateau supérieur 18.

Lors d'une variation de température l'écartement entre le plateau supérieur 18 et le couvercle 14 varie du fait des dilatations thermiques différentes de la cuve 10 et de la colonne 16. Lors d'un écartement du plateau supérieur 18 du couvercle 14, les haubans 30, 32 sont allongés en mettant sous tension la liaison élastique 46. Cette prétension ne modifie pas l'effet de centrage exercé par les haubans 30, 32 lors d'une oscillation de la colonne 16. L'allongement des haubans 30, 32 implique un pivotement relatif autorisé par les rotules 42 et la liaison élastique 46.

L'effet de centrage obtenu par deux haubans 30, 32 est différent selon que le déplacement s'effectue dans le plan des haubans ou dans un plan perpendiculaire, et il est avantageux d'utiliser un nombre supérieur de haubans, par exemple trois ou quatre, la répartition régulière étant bien entendu respectée. La figure 4 illustre à titre d'exemple une fixation à trois haubans disposés à 120°. Le nombre de haubans sera choisi en fonction des intensités des chocs ou des séismes prévisibles.

L'invention s'étend également à la variante dans laquelle les haubans 30, 32 seraient constitués en une pièce monobloc élastique, ou celle encore dans laquelle les haubans 30, 32 s'étendraient dans une direction radiale.

## Revendications

1. Disjoncteur blindé haute tension ayant une cuve métallique (10) verticale allongée, obturée par un couvercle (14) supérieur et remplie d'un gaz à rigidité diélectrique élevée, la partie active (16) du disjoncteur en forme de colonne étant logée dans ladite cuve (10) en reposant sur le fond inférieur (24) de la cuve (10) par des pieds isolants (22), caractérisé par le fait que la partie supérieure (18) de ladite colonne (16) est ancrée à ladite cuve (10) par au moins deux haubans (30, 32) élastiques susceptibles d'exercer une composante radiale de maintien en position de la colonne (16).

2. Disjoncteur blindé selon la revendication 1, caractérisé en ce que lesdits haubans (30, 32) sont ancrés d'une part à la face supérieure (18) de la colonne (16) et d'autre part vers la face interne du couvercle (14) de la cuve (10).

3. Disjoncteur blindé selon la revendication 2, caractérisé en ce que le boulon (59) de fixation du couvercle (14) constitue l'ancrage du hauban (30) au couvercle.

4. Disjoncteur blindé selon la revendication 1, 2 ou 3, caractérisé en ce qu'il comporte au moins trois haubans (30) régulièrement répartis sur la colonne (16).

5. Disjoncteur blindé selon la revendication 1, 2, 3 ou 4, caractérisé en ce que chacun desdits haubans (30, 32) comprend une bielle isolante (36) reliée à deux pièces terminales (38, 40) d'ancrage, ledit hauban (30, 32) présentant une élasticité en compression et en traction.

6. Disjoncteur blindé selon la revendication 5, caractérisé en ce que l'une (40) desdites pièces terminales (38, 40) constitue une liaison télescopique (46) sollicitée en une position intermédiaire inactive par un système élastique (52).

7. Disjoncteur blindé selon la revendication 5 ou 6, caractérisé en ce qu'il comporte une tige (48) montée à coulissement dans un carter (50) de logement de deux ressorts (52) montés en opposition et entre lesquels est interposée une butée (54) solidaire de ladite tige (48).

8. Disjoncteur blindé selon la revendication 5, 6 ou 7, caractérisé par le fait que la pièce d'ancrage (40) au couvercle (14) présente un dispositif de réglage (56) de la longueur du hauban (30).

9. Disjoncteur blindé selon la revendication 8, caractérisé en ce que la liaison télescopique (46) est intégrée à l'une des pièces d'ancrage (40).

10. Disjoncteur blindé selon l'une quelconque des revendications précédentes, caractérisé en ce que chaque hauban (30, 32) est articulé sur la partie supérieure (18) de la colonne (16).

## Claims

1. High voltage metal-clad circuit breaker comprising an elongated vertical metal tank (10), obturated by a top cover (14) and filled with a gas of high dielectric strength, the active part (16) of the circuit breaker of column-shape being placed in said tank (10) and lying on the lower bottom (24) of the tank (10) by insulating feet (22), characterized by the fact that the upper part (18) of said column (16) is secured to said tank (10) by at least two elastic stays (30, 32) capable of exerting a radial component to maintain the column (16) in position.

2. Metal-clad circuit breaker according to claim 1, characterized in that said stays (30, 32) are anchored on the one hand to the upper part (18) of the column (16) and on the other hand to the inner side of the cover (14) of the tank (10).

3. Metal-clad circuit breaker according to claim 2, characterized in that the bolt (59) to fasten the cover (14) forms the stay anchor to the cover.

4. Metal-clad circuit breaker according to claim 1, 2 or 3, characterized in that it comprises at least three stays (30) regularly distributed on the column (16).

5. Metal-clad circuit breaker according to claim 1, 2, 3 or 4, characterized in that each of said stays (30, 32) comprises an insulating connecting rod (36) connected to two anchor terminal parts (38, 40), said stay (30, 32) showing an elasticity under compression and traction.

6. Metal-clad circuit breaker according to claim 5, characterized in that one (40) of said terminal parts (38, 40) forms a telescopic connection (46) biased in an inactive intermediate position by an elastic system (52).

7. Metal-clad circuit breaker according to claim 5 or 6, characterized in that it comprises a rod (48) sliding in a casing for housing two springs (52) mounted in opposition and between which is interposed a stop (54) locked with said rod (48).

8. Metal-clad circuit breaker according to claim 5, 6 or 7, characterized by the fact that the anchor part (40) to the cover (14) shows a device (56) to adjust the stay (30) length.

9. Metal-clad circuit breaker according to claim 8, characterized in that the telescopic connection (46) is combined with one of the anchor parts (40).

10. Metal-clad circuit breaker according to any of the preceding claims, characterized in that each stay (30, 32) is hinged on the upper part (18) of the column (16).

## Patentansprüche

1. Gekapselter Hochspannungsschalter mit einem senkrechten, länglichen Metallbehälter (10), der mit einem oberen Deckel (14) verschlossen ist und mit einem Gas von hoher dielektrischer Festigkeit gefüllt ist, wobei der säulenförmige aktive Teil (16) des Schalters in dem genannten Behälter (10) untergebracht ist und auf dem unteren Boden (24) des Behälters (10) mittels isolierender Pfosten (22) ruht, dadurch gekennzeichnet, dass der obere Teil (18) der genannten Säule (16) mit dem genannten Behälter (10) verankert ist durch mindestens zwei elastische Anker (30, 32), die eine radiale Komponente ausüben können, um die Säule (16) in ihrer Lage zu halten.

2. Gekapselter Schalter gemäss Anspruch 1, dadurch gekennzeichnet, dass die genannten Anker (30, 32) einerseits mit der oberen Seite (18) der Säule (16) und andererseits mit der inneren Seite des Deckels (14) des Behälters (10) verankert sind.

3. Gekapselter Schalter gemäss Anspruch 2, dadurch gekennzeichnet, dass die Schraube (59) zur Befestigung des Deckels (14) die Verankerung des Anders (30) mit dem Deckel bildet.

4. Gekapselter Schalter nach Anspruch 1, 2 oder 3, dadurch gekennzeichnet, dass er mindestens drei Anker (30) aufweist, die regelmässig auf der Säule (16) verteilt sind.

5. Gekapselter Schalter gemäss Anspruch 1, 2, 3 oder 4, dadurch gekennzeichnet, dass jeder der genannten Anker (30, 32) eine Isolierstange (36) aufweist, die mit zwei Verankerungs-Endstücken (38, 40) verbunden ist, wobei der genannte Anker (30, 32) eine Druck- und Zugelastizität besitzt.

6. Gekapselter Schalter gemäss Anspruch 5, dadurch gekennzeichnet, dass eines (40) der genannten Endstücke (38, 40) eine teleskopische Verbindung (46) bildet, welche durch ein elastisches System (52) in eine unaktive Zwischenstellung gebracht wird.

7. Gekapselter Schalter gemäss Anspruch 5 oder 6, dadurch gekennzeichnet, dass er eine Stange (48) aufweist, die gleitbar in einem Gehäuse (50) montiert ist, in welchem zwei Federn (52) entgegengesetzt angebracht sind, zwischen denen ein mit der genannten Stange (48) verbundener Anschlag (54) eingefügt ist.

8. Gekapselter Schalter gemäss Anspruch 5, 6 oder 7, dadurch gekennzeichnet, dass das Stück (40) zur Verankerung mit dem Deckel (14) eine Stellvorrichtung (56) für die Länge des Ankers (30) aufweist.

9. Gekapselter Schalter gemäss Anspruch 8, dadurch gekennzeichnet, dass die teleskopische Verbindung (46) in einem der Verankerungsstücke (40) integriert ist.

10. Gekapselter Schalter gemäss irgendeinem der vorhergehenden Ansprüche, dadurch gekennzeichnet, dass jeder Anker (30, 32) auf dem oberen Teil (18) der Säule (16) schwenkbar gelagert ist.

Fig:1

Fig: 2

Fig: 3

Fig:4